# EUROPEAN PATENT SPECIFICATION

(11) **EP 1 701 510 B1**
(45) Date of publication and mention of the grant of the patent: **24.06.2015**
(21) Application number: 06110832.0
(22) Date of filing: 08.03.2006
(51) Int. Cl.: H04L 29/06, H04L 12/22

(54) **Secure remote access to non-public private web servers**
Sicherer Fernzugriff auf nichtöffentliche private Webserver
Accès à distance sécurisé à des serveurs Web privés non publics

(30) Priority: 08.03.2005 US 906833
(43) Date of publication of application: 13.09.2006
(73) Proprietor: Johnson, R. Brent, 8802 Kilchberg (CH); Securedatainnovations AG, 8001 Zürich (CH)
(72) Inventor: Johnson, R. Brent, 8802 Kilchberg (CH); Sawyer, John, Pompano Beach, FL 33060-7608 (US)
(74) Representative: Weickmann & Weickmann

(56) References cited:
- WO-A2-2006/014842
- US-A1- 2003 074 580

## Description

### BACKGROUND OF THE INVENTION

### 1. Field of the Invention.

The present invention is directed to a method and a system to facilitate secure remote access from a remote client user to a non-public web server having a web browser in order to permit maintenance and repair.

### 2. Prior Art.

Increasing amounts of time, effort and money are being spent on protecting computer networks of businesses and other organizations from external tampering and invasion. For example, a company may have multiple mainframes, personal computers, other hardware and software all linked together by a company intranet network. While various access points are sometimes utilized to permit communication outside of the internal company network, firewalls and other precautions are utilized to prevent external access to the company intranet.

Oftentimes, various hardware and software incorporate a standard web server. For example, routers that route data traffic and hardware management consoles that monitor and control mainframes have web servers. A web browser is a software package that enables the user to display and interact with data hosted by web servers.

Web browsers communicate with web servers primarily using the HTTP protocol which allows web browsers to submit data to web servers as well as retrieve data from them. Many browsers support a variety of URL types, including Aftp: @ for FTP and Ahttps: @ for HTTPS (an SSL encrypted version of HTTP).

While there are various web servers such, as Microsoft Internet Information Server and the Apache web server, most of the common ones are readily accessible and open to outside intervention. Although web servers are easy to access, many of these hardware devices and software need to be kept private.

In addition, it is recognized that it is advantageous for computer hardware and software of a business or organization to be geographically diverse. For example, while it may be economical for a company to keep all of its computer equipment at one facility, in the event of a disaster, the business is vulnerable. Accordingly, businesses often keep groups of equipment at diverse geographic locations. Maintenance and repair of equipment in multiple locations may be a challenge. Accordingly, it is a principal object and purpose of the present invention to provide authorized remote access by a client user to a non-public web server while prohibiting unauthorized access.

It is a further object and purpose of the present invention to provide secure remote access to a non-public web server requiring no special software on the web server or on the remote users web browser.

It is a further object and purpose of the present invention to close all unsecured, vulnerable ports of private web browsers to unencrypted data traffic.

It is a further object and purpose of the present invention to allow authorized encrypted data traffic to approved web server addresses based on encrypted user/ID password pairs.

It is a further object and purpose of the present invention to protect all private web sites and web servers from unauthorized random access.

It is a further object and purpose of the present invention to encrypt any and all data transferred from a remote location or from a remote client to a web server.

It is a further object and purpose of the present invention to ensure the identity of a remote client before any access to a non-public web server is granted.

It is a further object and purpose of the present invention to administer access to protected web servers remotely.

It is a further object and purpose of the present invention to maintain all security rights and privileges to various web servers and web browsers in a central location.

From U.S. 2003/0074580 A1 a system to facilitate secure remote access to a non-public web server having a web browser is already known, which comprises:
at least one remote client central processing unit in communication with at least one non-public host web server,
a hardware management console having hardware management console application software in communication with said non-public host web server,
a mainframe central processing unit, wherein said hardware management console software operates, monitors, and controls said mainframe central processing unit, and
at least one remote security administrator communicably attached to said at least one remote client central processing unit and to said non-public host web server.

Departing from this state of the art, it is the object of the present invention to make the remote access to a non-public web server easier and more versatile while still keeping highest security standards.

This problem is solved according to the invention by the characterizing features of claim 1 and by the method of claim 7.

### SUMMARY OF THE INVENTION

The present invention provides and facilitates secure remote access by a remote client central processing unit having a standard web browser to a non-public web server. In one embodiment of the invention, at least one remote client central processing unit having a standard browser is in communication with a non-public host web server through a public network. A security administrator central processing unit in communication with both remote client central processing unit manually manages creating, editing, and deleting user/password pairs as well as creating, editing, and deleting non-public web servers from a list.

First software validates authorized remote client user access to the non-public host web server. Once authorized and connected, a list of approved non-public web servers may be presented to the remote client user.

In one embodiment, second software is capable of remotely configuring and utilizing application software in the form of hardware management console software which is in communication with the non-public host web server.

### BRIEF DESCRIPTION OF THE DRAWINGS

Figure 1 is a simplified diagrammatic view of an arrangement embodying a system for secure remote access to non-public private web servers as set forth in the present invention; and
Figure 2 is a diagrammatic view of the present invention showing communication between a client and multiple web servers.

### DETAILED DESCRIPTION OF THE PREFERRED EMBODIMENTS

The embodiments discussed herein are merely illustrative of specific manners in which to make and use the invention and are not to be interpreted as limiting the scope of the instant invention.

While the invention has been described with a certain degree of particularity, it is to be noted that many modifications may be made in the details of the invention's construction and the arrangement of its components without departing from the scope of this disclosure. It is understood that the invention is not limited to the embodiments set forth herein for purposes of exemplification.

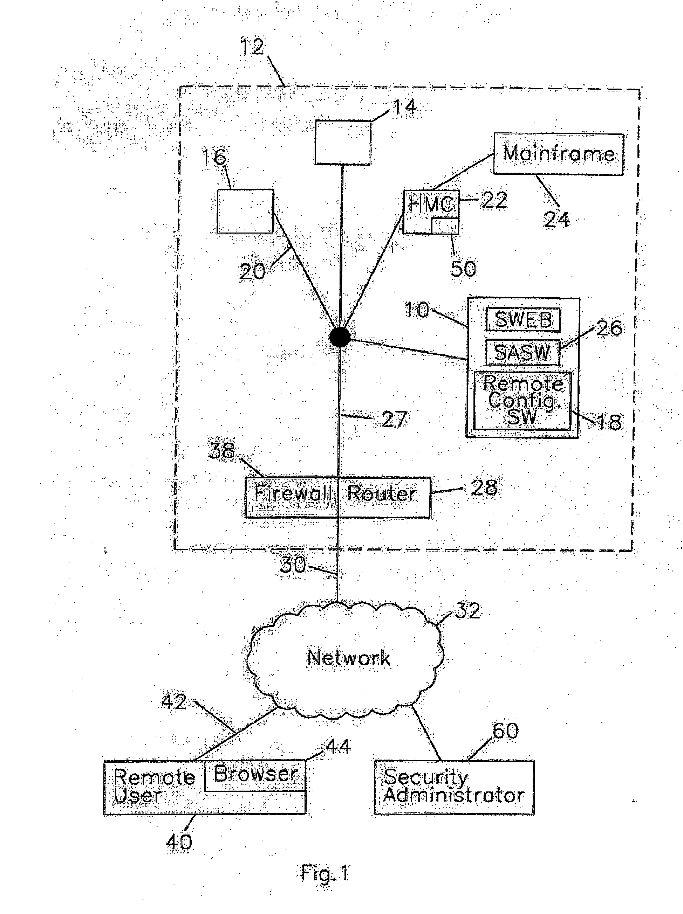

Referring to Figure 1, a simplified diagrammatic view of one preferred embodiment of the present invention is illustrated. A company or organization is illustrated by dashed lines 12. The business or organization may have multiple pieces of equipment and software, such as computer terminals 14 and 16 and device 10. In a present, preferred embodiment, the device 10 includes an emulated device controllerto be described in detail herein. It will be appreciated that the invention may be employed on devices other than an emulated device controller within the teachings of the present invention. In all instances, the device 10 includes a central processing unit having a host dynamically linked library (DLL) having a library of executable functions or data, such as those that can be used by a Windows™ application.

As seen in Figure 1, the device 10 includes remote configuration software 18 and proprietary software 26 known as ASecure Agent@ which is described at length in Applicant=s Patents No. 5,970,149 and 6,499,108. The access rights of each client is governed by data stored on the Secure Agent device 10 to which the client is governed.

All of the hardware, devices and software of the business organization 12 are linked together by an internal network 20 or networks. The business organization 12 may also include a hardware management console (HMC) 22 which is a software application running on a personal computer central processing unit that includes a keyboard and display. The HMC has a standard built-in web server 50. The hardware management console 22 interfaces with, monitors, and controls a mainframe central processing unit 24. The console 22 is used to display messages about the mainframe computer system.

The internal network 20 is an intranet, that is, it operates within the bounds of the organization and is not generally accessible to the public and has limited connection to public communication networks.

A communication path 27 provides a connection to a router 28 which routes data traffic and is interposed between a communication path 30 to a public network, such as the Internet 32. A firewall 38 may be employed to limit access to the organization 12.

The invention also includes at least one remote client central processing unit user 40 connected to the Internet 32 via communication path 42. The remote client user 40 includes a standard web server and web browser 44.

A security administrator 60 may be used to manage creation, editing, and deletion of user/password pairs as well as creating, editing, and deleting non-public web servers from a list.

The remote client web browser 44 establishes an SSL (Secure Socket Layer) connection into a SecureAgent server 10 which challenges the remote user for their userid and password. Upon verifying these credentials against that stored within SecureAgent, a page is provided to the remote client user 40 that consists of a series of links for internally protected web servers. This page provides, therefore, a "selection list" for the remote user from which he may choose a particular connection they desire to establish. When they click on the link a more-or-less "pass through" connection is established by the device 10 to the desired target web server. Anything further received from the remote client is passed directly along to the web server 50 and anything from the web server 50 is passed directly back to the remote client.

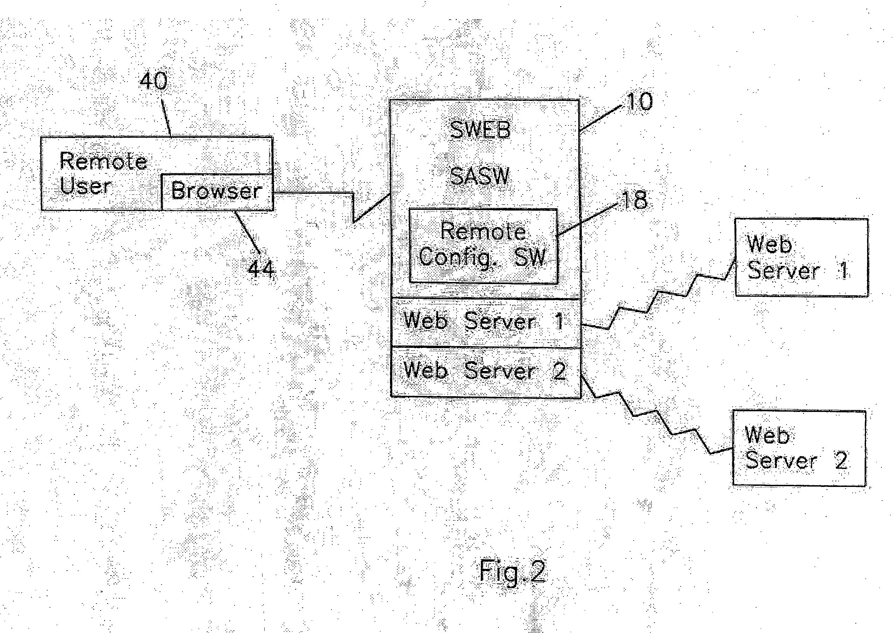

An example of the invention may be appreciated where the server device 10 has two network adapters, one of which is connected to an internal private LAN which includes the HMC, the other connected to the public internet. An internet user would not directly be able to reach the HMC but could access the SecureAgent server=s adapter connected to the internet. The invention running on the device 10 would be able to accept a connection from the remote internet user, authenticate its access then "patch-panel" through to the HMC. An example in Figure 2 illustrates reaching protected web servers.

A second example would be when there is only a single network adapter in the SecureAgent server device 10 and is connected to both the HMC and the public internet, but direct access from the internet to the HMC is prevented by a firewall. The invention would function identically.

The invention is implemented on a host DLL in order to take advantage of the secure remote configuration and management it affords such as specifying the criteria for the various web servers protected by the invention and controlling user access thereto. For each protected web server, the criteria includes but is not limited to a descriptive name, its network address including port number, the security groups assigned to it to restrict user access, the TCP/IP port number used to listen to inbound SSL connections intended for it and whether it utilizes the SSL protocol. The configuration also includes the ability to manage user IDs, passwords and security groups authorizing users to access the individual web servers protected by the invention. When a user's definition includes a security group matching one defined for a protected web server then the user has the ability to connect to that server upon demand. Finally, management also includes the ability to enumerate all authorized users and, if desired, forcibly disconnect a specific remote user connection.

When there are many web servers protected on different ports by the invention, it rapidly becomes desirable to provide a web page to the remote client user that affords a list of the protected web servers from which to select access. The invention provides this option to present a selection list that, when associated to the default SSL port, means the user must only know the address of the invention rather than which individual port numbers protect which individual web servers.

The invention simultaneously listens for inbound user connections to one or more ports as configured. Upon a connection, it immediately passes control over to an open source Secure Socket Layer (SSL) server implementation called OpenSSL used by the invention to provide SSL support. A unique certificate and private key are provided by it and are utilized during its SSL authentication and encryption process and offer assurance to the user that the connection to the invention is secure. Once an SSL connection has been established, a unique SSL session ID is generated and associated to it.

Unfortunately, SSL suffers from the problem of not feasibly assuring the web server that the connecting user has the necessary authority to access its services. To remedy this, the invention further controls each new connection by prompting for a user ID and password pair as defined to SecureAgent. Upon the remote client user's response, the information is compared against the server's user database and access either granted upon a match or disallowed if either not valid or if the user lacks sharing a security group with the protected web server. In the case of a rejection, the remote client user is provided a specific error response indicating why their access was not granted.

Once a remote client user has completed both ordinary SSL authentication and the invention's additional user ID challenge, password and security group verification, the invention internally records this completed authentication state with the SSL session ID so that it knows during further accesses that access to the internally protected web server may occur.

At this point, the invention establishes a connection to the private web server and becomes a gateway that simply passes data between the two systems. The connection to the remote client remains under protection of the SSL connection while the connection to the protected web server might or might not also use the SSL protocol as specified by its configuration. If the connection to the protected web server utilizes the SSL protocol then OpenSSL is also used to accomplish that connection and it performs the necessary encryption and decryption of data.

The same SSL session ID will continue to be utilized for a remote user's connection to a specific protected web server. However, if the remote user decides to simultaneously access a different port on the invention, in order to access a different protected server, a different SSL session ID will be generated and used. Therefore, authentication for one protected web server does not gain access to a different protected server. The remote user must not only again provide a valid user ID and password, it must also share a security group with the other protected web server.

When a remote client user ends a connection, notification is made by OpenSSL to the device and the stored SSL session ID and corresponding completed authentication state are purged. Additionally, the present invention exposes the ability to enumerate the entries in the SSL session ID cache, showing the user ID and protected server being accessed for each. If desired, an administrator may selectively disconnect any such connection.

SSL certificates and corresponding private keys may be produced either by OpenSSL utilities or by third party certificate authorities, such as VeriSign.

The invention may be appreciated from an example. Upon startup the invention initializes OpenSSL, providing to it a certificate file (for example, sslcert.pem) which might also contain the private key. If not then it provides to it a separate private key file (sslpvtky.pem). A pair of callbacks are at this time established for OpenSSL to call as required. The first is for when a new SSL session ID is generated and the second for when an old SSL session ID is purged.

The invention next retrieves any previously specified protected server information from a configuration database and opens each specified listen port. It then listens for any incoming client connections and thereupon initializes a unique session instance for each, providing to it the accepted client socket handle and a pointer to the OpenSSL server instance.

The session instance then provides the client socket handle to the OpenSSL server instance so it might negotiate a secure connection with the client after which OpenSSL calls the previously noted callback function whereby it informs the application that a new SSL session ID has become generated. The session instance is then prepared to receive data from the client, at which point a check is made as to whether it has completed user ID authentication. If not, then received client data is inspected as to whether it is a HTTP GET and, if so, a prompt is sent to the client for their SecureAgent user ID and password. If the client data inspection proves instead to be a HTTP PUT then the data is assumed to be the response to the user ID and password prompt. If they are found to be present in the data then a comparison is made against the set of user IDs and corresponding passwords stored on the invention's SecureAgent server. A match causes each of the user's assigned security groups to be compared to each of the protected server's security groups. A match of any single such compare causes an indication that authentication has been completed to be stored along with the user ID with the previously provided SSL session ID for this connection. A connection is now established to the protected server and any data received from the client is passed to it and vice versa.

If the user provides an invalid user ID, incorrect password or lacks an appropriate security group then an applicable error message is provided to them.

If the administrator selects the option to offer a selection list then a client connection to the default SSL port (443) is similarly authenticated but results in a list of all configured servers rather than establishing a remote connection to one of those protected servers. Clicking on any of these links connects the user back to the invention using the different indicated port.

If either the client or server disconnects, then the session instance is terminated but the SSL session ID cleanup awaits either notification from the OpenSSL session ID purged callback or an administrator selecting the SSL session ID and disconnect it. Both OpenSSL and the invention have timeouts forcing stale SSL session IDs to be purged after a period of time.

The invention exposes to the administrator an enumeration of its set of currently existing SSL session IDs and associated user IDs, providing the option to purge any specific connection. The invention also exposes a list of protected servers allowing additions, changes and deletions. The addition of a server causes its listen port to be included with those already opened for possible client connections while a deletion causes its listen port to be removed. Any change for a protected server definition likewise takes immediate effect. Any such modification of the list of protected servers is saved to a configuration database.

Invention shutdown causes a disconnection of all current users, deletion of all session instances followed by termination of the OpenSSL server instance.

It will be appreciated that the present invention provides secure access to non-public web servers without any special or proprietary hardware required by the web server or browser.

Whereas, the present invention has been described in relation to the drawings attached hereto, it should be understood that other and further modifications, apart from those shown or suggested herein, may be made within the scope of this invention.

## Claims

1. A system comprising:
at least one remote client central processing unit (40) in communication with at least one non-public host web server (24) for the limited purpose of validating remote client user access;
a hardware management console (22) having hardware management console application software (50) in communication with said non-public host web server (24);
a mainframe central processing unit, wherein said hardware management console software operates, monitors and controls said mainframe central processing unit;
at least one remote security administrator (60) communicably attached to said at least one remote client central processing unit and to said non-public host web server (24);
**characterized by**
an emulated device controller central processing unit (10) in communication with said non-public host web server (24);
first software means (26) to validate authorized remote client user access to said at least one non-public host web server (24), wherein said first software means (26) is resident on said emulated device controller central processing unit (10); and
second software means (18) to remotely configure and utilize said hardware management console application software (50) in communication with said non-public host web server (24), said second software means (18) is resident on said emulated device controller central processing unit (10).

2. A system as set forth in Claim 1 including a communication mechanism (28), wherein all data exchanged between said at least one remote client central processing unit (40) and said non-public host web server (24) is encrypted prior to transmission and decrypted subsequent to transmission.

3. A system as set forth in one of the preceding claims including a communication mechanism (28), wherein all data exchanged is encrypted prior to transmission and decrypted subsequent to transmission.

4. A system as set forth in one of the preceding claims wherein said non-public host web server (24) is in communication with Hardware management console application software (50) and wherein said communication between said remote client central processing unit (40) and said hardware management console application software (50) is through a public network (32).

5. A system as set forth in one of the preceding claims, wherein said public network (32) is the Internet.

6. A system as set forth in one of the preceding claims including a firewall (28) interposed between said at least one remote client (40) and said non-public host web server (24).

7. A method comprising:
establishing a list of authorized remote clients for a non-public host web server (24);
connecting at least one remote client user (40) to said non-public host web server (24) for the limited purpose of validating said remote client user but not permitting other data traffic between said remote client user (40) and said non-public host web server (24);
presenting a list of non-public web servers to said at least one remote client user (40);
validating said list of authorized remote client users with first software means (26) resident on an emulated device controller (10);
remotely configuring and utilizing hardware management console (22) application software with second software means (18) resident on said emulated device controller (10) central processing unit; and
permitting data trafic between said remote client user (40) and said non-public host web server (24).

## Patentansprüche

1. Ein System mit:
mindestens einem entfernten Zentralrechenwerk (40) eines Clients in Verbindung mit mindestens einem nicht öffentlichen Host-Web-Server (24) für den ausschließlichen Zweck der Validierung des Zugangs für den Benutzer des entfernten Clients;
einer Hardware-Verwaltungskonsole (22) mit Hardware-Managementanwendungsprogrammen (50) in Verbindung mit dem nicht öffentlichen Host-Web-Server (24);
einem Zentralrechenwerk eines Hauptcomputers, in dem die Hardware-Verwaltungskonsoleprogramme das Zentralrechenwerk des Hauptrechners betreiben, überwachen und steuern;
mindestens einem entfernten Sicherheitsverwalter (60), der nachrichtentechnisch verbunden ist mit dem wenigstens einen entfernten Rechenwerk des Clients und mit dem nicht öffentlichen Host-Web-Server (24);
**gekennzeichnet durch**
ein emuliertes Zentralrechenwerk (10) für die Gerätesteuerung in Verbindung mit dem nicht öffentlichen Host-Web-Server (24);
erste Computerprogrammeinrichtungen (26) zur Validierung des autorisierten Zugangs des Benutzers des entfernten Clients zu dem wenigstens einen nicht öffentlichen Host-Web-Server (24), wobei die erste Computerprogrammeinrichtung (26) auf dem emulierten Zentralrechenwerk (10) für die Gerätesteuerung läuft; und
zweite Computerprogrammeinrichtungen (18), die dazu dienen, die Hardware-Verwaltungskonsoleanwendungsprogramme (50) von der Ferne zu konfigurieren und zu verwenden in Verbindung mit dem nicht öffentlichen Host-Web-Server (24), wobei die zweite Computerprogrammeinrichtung (18) auf dem emulierten Zentralrechenwerk (10) für die Gerätesteuerung läuft.

2. System nach Anspruch 1 mit einer Kommunikationsvorrichtung (28), wobei alle Daten, die zwischen dem wenigstens einen Zentralrechenwerk (40) des entfernten Client und dem nicht öffentlichen Host-Web-Server (24) ausgetauscht werden, vor der Übertragung verschlüsselt werden und nach der Übertragung entschlüsselt werden.

3. System nach einem der vorhergehenden Ansprüche mit einer Kommtnikationsvorrichtung (28), wobei alle ausgetauschten Daten vor der Übertragung verschlüsselt und nach der Übertragung entschlüsselt werden.

4. System nach einem der vorhergehenden Ansprüche, wobei der nicht öffentliche Host-Web-Server (24) in Verbindung steht mit Hardware-Verwaltungskonsoleanwendungsprogrammen (50) und wobei die Kommunikation zwischen dem zentralen Rechenwerk (40) des entfernten Client und dem Hardware-Verwaltungskonsoleanwendungsprogramm (50) über ein öffentliches Netz (32) erfolgt.

5. System nach einem der vorhergehenden Ansprüche, wobei das öffentliche Netz (32) das Internet ist.

6. System nach einem der vorhergehenden Ansprüche mit einer Firewall (28), die zwischen dem wenigstens einem entfernten Client (40) und dem nicht öffentlichen Host-Web-Server (24) eingesetzt ist.

7. Ein Verfahren mit:
Aufstellung einer Liste zugelassener entfernter Clients für einen nicht öffentlichen Host-Web-Server (24);
Verbinden von zumindest einem Benutzer (40) eines entfernten Clients mit dem nicht öffentlichen Host-Web-Server (24) für den ausschließlichen Zweck der Validierung des Benutzers des entfernten Clients, wobei kein anderer Datenverkehr zwischen dem Benutzer (40) des entfernten Clients und dem nicht öffentlichen Host-Web-Server (24) zugelassen ist;
Vorgeben einer Liste nicht öffentlicher Webserver an den zumindest einen Benutzer (40) eines entfernten Clients;
Validierung der Liste zugelassener Benutzer der entfernten Clients mit ersten Computerprogrammeinrichtungen (26), die auf einer emulierten Gerätesteuerung (10) laufen;
Konfigurieren und Benutzen eines Anwendungscomputerprogrammes einer Hardware-Verwaltungskonsole (22) mit zweiten Computerprogrammeinrichtungen (18), die auf dem der emulierten Gerätesteuerung (10) zugeordneten Zentralrechenwerk laufen, aus der Ferne; und
Zulassen von Datenverkehr zwischen dem Benutzer (40) des entfernten Clients und dem nicht öffentlichen Host-Web-Server (24).

## Revendications

1. Système comprenant :
au moins une unité centrale de traitement de client distant (40) en communication avec au moins un serveur web hôte non public (24) dans le but limité de valider un accès utilisateur au client distant ;
une console de gestion de matériel (22) ayant un logiciel d'application de console de gestion de matériel (50) en communication avec ledit serveur web hôte non public (24) ;
une unité centrale de traitement d'ordinateur central, dans lequel ledit logiciel de console de gestion de matériel fait fonctionner, contrôle et commande ladite unité centrale de traitement d'ordinateur central ;
au moins un administrateur de sécurité à distance (60) fixé en communication avec ladite au moins une unité centrale de traitement de client distant et avec ledit serveur web hôte non public (24) ;
**caractérisé par** :
une unité centrale de traitement de contrôleur périphérique émulé (10) en communication avec ledit serveur web hôte non public (24) ;
des premiers moyens logiciels (26) pour valider l'accès utilisateur au client distant autorisé audit au moins un serveur web hôte non public (24), dans lequel lesdits premiers moyens logiciels (26) sont résidents sur ladite unité centrale de traitement de contrôleur périphérique émulé (10) ; et
des seconds moyens logiciels (18) pour configurer et utiliser à distance ledit logiciel d'application de console de gestion de matériel (50) en communication avec ledit serveur web hôte non public (24), lesdits seconds moyens logiciels (18) étant résidents sur ladite unité centrale de traitement de contrôleur périphérique émulé (10).

2. Système selon la revendication 1, comprenant un mécanisme de communication (28), dans lequel toutes les données échangées entre ladite au moins une unité centrale de traitement de client distant (40) et ledit serveur web hôte non public (24) sont cryptées avant transmission et décryptées après transmission.

3. Système selon l'une quelconque des revendications précédentes, comprenant un mécanisme de communication (28), dans lequel toutes les données échangées sont cryptées avant la transmission et décryptées après transmission.

4. Système selon l'une quelconque des revendications précédentes, dans lequel ledit serveur web hôte non public (24) est en communication avec le logiciel d'application de console de gestion de matériel (50) et dans lequel ladite communication entre ladite unité centrale de traitement de client (40) distant et ledit logiciel d'application de console de gestion de matériel (50) se fait via un réseau public (32).

5. Système selon l'une quelconque des revendications précédentes, dans lequel ledit réseau public (32) est l'Internet.

6. Système selon l'une quelconque des revendications précédentes, comprenant un mur pare-feu (28) intercalé entre ledit au moins un client distant (40) et ledit serveur web hôte non public (24).

7. Procédé comprenant les étapes consistant à :
établir une liste de clients distants autorisés pour un serveur web hôte non public (24) ;
connecter au moins un utilisateur de client distant (40) audit serveur web hôte non public (24) dans le but limité de valider ledit utilisateur du client distant, mais sans permettre un autre trafic de données entre ledit utilisateur de client distant (40) et ledit serveur web hôte non public (24) ;
présenter une liste de serveurs web non publics audit au moins un utilisateur de client distant (40) ;
valider ladite liste d'utilisateurs de clients distants autorisés avec des premiers moyens logiciels (26) résidant sur un contrôleur périphérique émulé (10) ;
configurer et utiliser à distance un logiciel d'application de console de gestion de matériel (22) avec des seconds moyens logiciels (18) résidant sur ladite unité centrale de traitement de contrôleur périphérique émulé (10) ; et
permettre un trafic de données entre ledit utilisateur de client distant (40) et ledit serveur web hôte non public (24).
